# EUROPEAN PATENT SPECIFICATION

(11) **EP 3 680 272 B1**
(45) Date of publication and mention of the grant of the patent: **23.08.2023**
(21) Application number: 19151061.9
(22) Date of filing: 09.01.2019
(51) Int. Cl.: C08G 65/26

(54) **CATALYST SYSTEM FOR THE PREPARATION OF HIGH-MOLECULAR WEIGHT POLYETHER AND APPLICATION THEREOF**
KATALYSATORSYSTEM ZUR HERSTELLUNG VON POLYETHER MIT HOHEM MOLEKULARGEWICHT UND ANWENDUNG DAVON
SYSTÈME DE CATALYSEUR POUR LA PRÉPARATION DE POLYÉTHER À POIDS MOLÉCULAIRE ÉLEVÉ ET SON APPLICATION

(43) Date of publication of application: 15.07.2020
(73) Proprietor: Universität Stuttgart, 70174 Stuttgart (DE)
(72) Inventor: NAUMANN, Stefan, 73733 Esslingen (DE); WALTHER, Patrick, 70563 Stuttgart (DE); BUCHMEISER, Michael R., 73630 Remshalden (DE)
(74) Representative: Meissner Bolte Partnerschaft mbB

(56) References cited:
- CN-A- 109 096 481
- JP-A- H11 255 884
- STEFAN NAUMANN ET AL: "N-Heterocyclic Olefins as Organocatalysts for Polymerization: Preparation of Well-Defined Poly(propylene oxide)", ANGEWANDTE CHEMIE, INTERNATIONAL EDITION, vol. 54, no. 33, 1 July 2015 (2015-07-01), pages 9550-9554, XP055600805, DE ISSN: 1433-7851, DOI: 10.1002/anie.201504175
- JAN MEISNER ET AL: "The Lewis Pair Polymerization of Lactones Using Metal Halides and N-Heterocyclic Olefins: Theoretical Insights", MOLECULES, vol. 23, no. 2, 15 February 2018 (2018-02-15), page 432, XP055600890, DOI: 10.3390/molecules23020432

## Description

The invention relates to a catalyst system for the synthesis of polyethers, preferably having a high molecular weight (> 25.000 g/mol), wherein the catalyst system comprises an N-heterocyclic olefin (NHO) and a Lewis acid (L). The invention is further concerned with a process for the production of polyethers by ring-opening polymerization of epoxides using the aforementioned catalyst system as well as high molecular weight polyethers having molecular weights (Mₙ) of 900.000 g/mol and even above.

### Background of the invention

Polyethers are widely employed polymers, which are utilized for example in pharmaceutical applications, as lubricants, surfactants or as macromonomers for poly(urethane) synthesis. The most convenient, and in practical terms almost exclusively applied, way to prepare polyethers is by ring-opening polymerization (ROP) of epoxide monomers. However, especially for substituted epoxides like propylene oxide (PO), established methods such as anionic ROP fail to deliver high-molecular weight polyethers as a consequence of transfer-to-monomer, which transfers the propagating chain end to a monomer, thereby limiting the molecular weight, broadening the molecular weight distribution and aggravating control over the end groups of the polymer. In addition, typical anionic polymerizations are also very slow (see Chem. Rev. 2016, 116, 2170-2243). Due to these disadvantages, there is a need for selective and simple catalysts which provide fast reaction as well as high conversion.

Past research has focused on the development of metal complexes as well as organocatalytic (metal-free) approaches for this task. For example, the scientific publication Macromol. Chem. Phys. 2003, 204, 1102-1109 discloses the polymerization of PO in the presence of phosphazenium salts and potassium alkoxide initiators. Albeit monomer conversion was found to be more rapid than when only potassium alkoxide was employed, transfer-to-monomer remained pervasive and the number-average molecular weight (Mₙ) was limited to 3,000 - 4,000 g/mol.

A series of publications has demonstrated the application of N-heterocyclic carbenes as organocatalysts for ethylene oxide (EO) and PO *(*J. Am. Chem. Soc. 2009, 131, 3201-3209; Macromolecules 2010, 43, 2814-2823; Chem. Commun., 2010, 46, 3203-3205). With these compounds poly(EO) with an Mₙ up to 12,000 g/mol was accessible. Poly(PO) could also be prepared, albeit with very limited conversion (40%) and a lower molar mass of the resulting polyether (Mₙ up to 8,000 g/mol).

Application of N-heterocyclic olefins instead of N-heterocyclic carbenes (in the absence of Lewis acids) resulted in improved conversion of PO to provide a well-defined polymer *(*Angew. Chem. Int. Ed. 2015, 54, 9550-9554); the obtained Mₙ, however, remained relatively low with up to 12,000 g/mol.

ChemCatChem, 2014, 6, 618-625 discloses the application of carbon dioxide-adducts with N-heterocyclic carbenes as catalysts for the polymerization of PO. The process was found to be slow, yielding only low-molecular weight poly(PO) (Mₙ < 2,000 g/mol).

Similarly, US 2015/197599 (A1) describes the N-heterocyclic carbene-mediated polymerization of PO, resulting however only in low-molecular weight material as determined by viscosity data.

Inorg. Chim. Act., 2004, 357, 3911-3919 discloses a combination of titanium alcoholates (Ti(OiPr)₄) and B(C₆F₅)₃ as a polymerization system with high turnover frequency for PO. Unfortunately, the reactions only delivered PPO with Mₙ < 3,000 g/mol.

The publication Macromolecules 1981, 14, 1162-1166 discloses the application of aluminium porphyrins for the polymerization of epoxides. In this case, controlled synthesis of block-copolymers was possible, but the received polyether displayed limited molecular weight (Mₙ < 20,000 g/mol).

The same group also showed that a setup consisting of organoboranes and aluminiumbased Lewis acids performs somewhat better, and provided poly(PO) with an Mₙ of up to about 10,000 g/mol (see Macromolecules 2003, 36, 5470-5481).

Di- and mononuclear aluminium complexes with piperidyl-phenolato ligands were investigated for the polymerization of PO and cyclohexene oxide (CHO) in scientific publication Inorg. Chem. 2016, 55, 6520-6524. These compounds showed moderate control over the polymerizations, with Mₙ up to 12,000 g/mol for poly(CHO) and 4,500 g/mol for poly(PO).

Another set of bimetallic aluminium complexes was disclosed by Okuda and co-workers (see Angew. Chem. Int. Ed. 2003, 42, 64-68), achieving poly(PO) with Mₙ up to 4,000 g/mol.

Triisobutylaluminium (Al(iBu)₃) was combined with several co-catalysts/initiators and presented in a series of scientific publications *(*Macromolecules 2004, 37, 4038-4043; Macromolecules 2007, 40, 7842-7847; Macromolecules 2009, 42, 2395-2400; Polym. Chem. 2012, 3, 1189-1195). Depending on the specific setup, poly(PO) could be prepared with typically Mₙ in the range of 20,000 - 80,000 g/mol. The polymerization mechanism is thought to operate via so-called "ate complexes", with the best results originating from the application of onium salts as co-catalysts/initiators. At very low temperatures, in some cases the polymerizations remained controlled and provided poly(PO) with a Mₙ up to 100,000 g/mol.

A group of chiral, bimetallic Co(III) catalysts was disclosed by Coates and co-workers *(*Macromolecules 2011, 44, 5666-5670); these compounds deliver poly(PO) of up to 100,000 - 150,000 g/mol in short reaction times, albeit only in the presence of an ionic co-catalyst (bis(triphenylphosphine)iminium acetate). The resulting polyether is isotactic, with moderate control over polydispersity (DM = 1.8 - 3.1).

The application of a Grignard-type reagent, Mg(nBu)₂, was demonstrated to result in poly(PO), whereby molar masses of up to 65,000 g/mol and considerable isoselectivity were achieved *(*Macromolecules 2017, 50, 1245-1250). Molar mass distribution was moderately controlled (DM = 1.6 - 2.3).

JP 03281529 A discloses the application of double metallocyanide catalysts for PO polymerization, providing polyethers with Mₙ of about 10,000 g/mol; similarly, double metal cyanide catalysts and their use for polymerization of PO are described in e.g. US 3278457, US 3278458, US 3278459, US 3427256, US 3427334 and US 3427335. In these documents, only viscosity data was published, indicating that the molecular weight of the products was low.

Zinc alkoxide catalysts were disclosed in EP 0239973 for the polymerization of cyclic alkylene oxides, albeit no molecular weights were published.

JP 2002293915 discloses a composition for PO polymerization, consisting of a crown ether, an alkali metal alkoxide or an alkali metal hydroxide or a trialkylsilanolate alkali metal salt and a trialkylaluminium/triarylaluminium compound in a specific ratio. After long reaction times (one week), poly(PO) with a molecular weight of up to 60,000 g/mol was received, with moderate control over polydispersity (Ð_{M} = 1.4 - 2.1).

JP 11255884 discloses a mixture of an organoaluminium compound, water, a chelating agent, a dihydroxy initiator and PO. In a multistep preparation, the active catalyst is generated from these ingredients, followed by addition of PO. Within 24 h poly(PO) is then prepared, with Mₙ up to 790,000 g/mol.

WO 99/55765 A1 discloses a catalyst composition of calcium with carbonate and alkanoate counter ions. With this setup, polyether polyols with molecular weights of up to 20,000 g/mol were obtained.

The scientific publications Macromolecules 2018, 51, 8286 and ChemSusChem 2018, DOI: 10.1002/cssc.201802258 describe a combination of triethyl borane and phosphazene bases for PO polymerization in the presence of alcohol initiators. Molecular weights of up to *M*ₙ = 200,000 g/mol are described.

The prior art mainly discloses the preparation of low- to intermediate-molecular weight polyethers; any reports of high molar mass polyether are limited to 800,000 g/mol (JP 11255884) or < 200,000 g/mol (all other examples), in clear contrast to the present invention. In addition, the catalytic systems of the prior art are either expensive (chiral bimetallic catalysts) or require impracticable conditions (very low temperatures, long reaction times, pyrophoric co-catalysts like aluminium alkyls). No prior publications detail the preparation of high-molecular weight PPO (> 200,000 g/mol) in the absence of hydroxyl-bearing initiators, also in contrast to the present invention.

The objective of the present invention was thus to identify an optimized and simple catalyst system for the synthesis of polyethers via ROP of epoxides, wherein the catalyst system should be characterized by a high reactivity (regarding TOF and TON), whereby practicable reaction conditions are applied. Furthermore, the system should also display a high selectivity, suppressing transfer-to-monomer and hence enabling exceptionally high molecular weights.

Surprisingly, it has been found that the problem can be solved by a catalyst system which comprises N-heterocyclic olefins and simple Lewis acids (L), enabling for reaction times down to few minutes, whereby molar masses of the generated polyether can be tailored to be in excess of 2 Mio g/mol.

### Description of the invention:

In a first embodiment, the present application is therefore directed at a composition comprising at least one epoxide monomer and a catalyst system, wherein the catalyst system comprises an N-heterocyclic olefin (NHO) and a Lewis acid (L).

NHOs possess a highly polarized, catalytically active double bond (Angew. Chem. Int. Ed. 2008, 47, 3210 -3214; J. Am. Chem. Soc. 2013, 135, 11996-12003; Angew. Chem. Int. Ed. 2015, 54, 9550-9554). This polarization is generated by the tendency of the N-heterocyclic ring moiety to accept a positive (partial) charge; the electron excess is thus located on the exocyclic carbon and engenders a considerable basicity and nucleophilicity which can be employed for catalyzing polymerizations.

In a preferred embodiment, the composition of the invention comprises a catalyst system comprising
a mixture of the N-heterocyclic olefin having the general formula (I) and the Lewis acid (L), 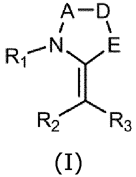
wherein A and D mutually independently represent methylene moiety, CHR₄, and CR₄R₄ or A and D together stand for a moiety from the series ethylene, propylene, butylene, 1,2-phenylene, R₄-C=N-, -N=N- or C₁-C₁₀ alkyl, C₂-C₁₀ alkenyl, C₃-C₁₂ cycloalkyl, C₆-C₁₀₀ polyoxyalkylene, C₅-C₁₀ aryl or C₅-C₁₀ hetaryl group-substituted 1,2-phenylene, -CH=N-, -CH₂-NR₄-, vinylene, -CH₂=CHR₄-, -CHR₄=CH₂-, -CHR₄=CHR₄-;
R₁ and R₄ mutually independently represent C₁-C₁₀ alkyl, C₂-C₁₀ alkenyl, C₃-C₁₂ cycloalkyl, C₆-C₁₀₀ polyoxyalkylene, C₅-C₁₀ aryl or C₅-C₁₀ heteroaryl, wherein the C₅-C₁₀ aryl or C₅-C₁₀ heteroaryl may be further substituted;
R₂ and R₃ mutually independently represent H, C₁-C₁₀ alkyl, C₂-C₁₀ alkenyl, C₃-C₁₂ cycloalkyl, C₆-C₁₀₀ polyoxyalkylene, C₅-C₁₀ aryl or C₅-C₁₀ heteroaryl, wherein the C₅-C₁₀ aryl or C₅-C₁₀ heteroaryl may be further substituted;
and wherein E is -O-, -S-, -NR₅- or -PR₅, and R₅ has the meaning given above for R₁.

If the C₅-C₁₀ aryl or C₅-C₁₀ heteroaryl mentioned above as an alternative for R₁ to R₄ is further substituted, the further substituent is preferably an alkyl- and more preferably a C₁₋₆-alkyl substituent. Moreover, the substituted C₅-C₁₀ aryls or C₅-C₁₀ heteroaryls preferably have 1 to 3 substituents.

In a further preferred embodiment of the invention, R₁ and R₄ in the N-heterocyclic olefin of the formula (I) are mutually independent and represent methyl, ethyl, n-propyl, isopropyl, tert-butyl, neopentyl, isoamyl, cyclohexyl, phenyl, 2,6-dimethylphenyl, 2,6-diisopropylphenyl or mesityl moiety; R₂ and R₃ are mutually independent and represent H, methyl, ethyl, n-propyl, isopropyl, cyclopropyl, tertbutyl, neopentyl, isoamyl, cyclohexyl, phenyl, 2,6-dimethylphenyl, 2,6-diisopropylphenyl or mesityl moiety; and the moieties A and D together stand for an ethylene, vinylene or propylene moiety.

For this embodiment, it is more preferred that R₁ and R₄ are mutually independent and represent methyl, ethyl, isopropyl, tertbutyl, cyclohexyl, phenyl or mesityl moieties; wherein R₂ and R₃ mutually independently represent H, methyl, ethyl or phenyl moieties.

In a yet even more preferred embodiment of the invention, the N-heterocyclic olefin is one or more compounds having the formulae (II-1), (II-2), (II-3), (II-4), (II-5), (II-6), (II-7), (II-8), (II-9), (II-10), (II-11), (II-12), (II-13) and (II-14) shown below.

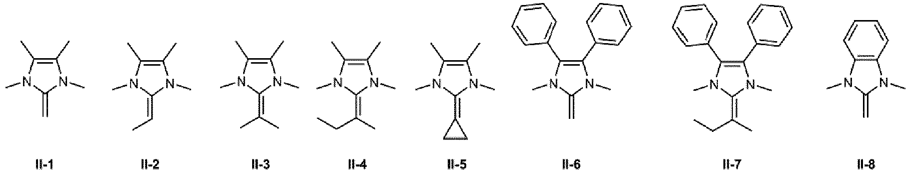

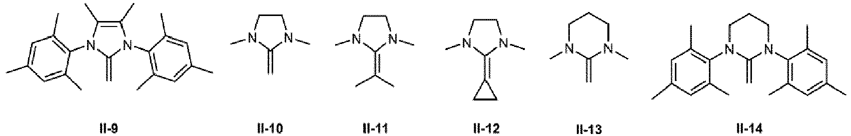

The term "Lewis acid" is used according to the definition given by IUPAC as a molecular entity (and the corresponding chemical species) that is an electron-pair acceptor and thus able to react with a Lewis base to form a Lewis adduct (regular, interacting or frustrated), by sharing the electron density provided by the Lewis base. Hence, the Lewis acid catalyst can occur as a metal ion or a metal ion complex within this definition.

The Lewis acid in the catalyst system of the invention regularly comprises a metal ion and a Lewis base as a "counter ion" or "ligand". The metal ion in the Lewis acid is preferably a metal ion or a metal ion complex selected from or comprising
Li(I), Na(I), K(I), Rb(I), Cs(I), Ag(I), Au(I),
Mg(II), Ca(II), Sr(II), Ba(II), Dy(II), Yb(II), Cu(II), Zn(II), V(II), Mo(II), Mn(II), Fe(II), Co(II) Ni(II), Pd(II), Pt(II), Ge(II), Sn(II),
Sc(III), Y(III), La(III), Ce(III), Pr(III), Nd(III), Sm(III), Eu(III), Gd(III), Tb(III), Dy(III), Ho(III), Er(III), Tm(III), Yb(III), Lu(III), Hf(III), Nb(III), Ta(III), Cr(III), Ru(III), Os(III), Rh(III), Ir(III), AI(III), Ga(III), In(III), TI(III), Ge(III),
Ce(IV), Ti(IV), Zr(IV), Hf(IV), Nb(IV), Mo(IV), W(IV), Ir(IV), Pt(IV), Sn(IV), Pb(IV),
Nb(V), Ta(V), P(V), Sb(V), Bi(V),
Mo(VI), W(VI).

If the Lewis acid comprises a ligand, the ligand is preferably selected from phosphine, phosphite, arsenite, alkyl, acetylacetonate or bis(trialkylsilyl)amide. The ligand may be coordinated to vacant coordination sites at the metal, whereby at least one coordination site remains available for binding of another Lewis base. The coordination site for binding of other Lewis bases may also be created in the reaction mixture, e.g., by dissociation of a weakly coordinating ligand.

Preferred counter-anions for the metal ion are anions, which are weakly coordinating to the metal ion or metal ion complex. Exemplary anions are selected from the group comprising chloride, bromide, iodide, tetrafluoroborate, bis(trifluoromethane)sulfonimide, [((Si(R')₃)₂N], [B(R')₄]-, [Al(R')₄]-, [Ga(R')₄]-, [In(R')₄]-, wherein R' represents hydrogen, a linear or branched, optionally heteroatom-including C₁- to C₂₂-alkyl rest, a linear or branched, mono- or polysubstituted, optionally heteroatom-including C₁- to C₂₂-alkenyl rest, a mono- or polysubstituted, optionally heteroatom-including C₆- to C₁₈-aryl rest or member(s) of a saturated or unsaturated, optionally heteroatom-including 4- to 7-membered ring or polycyclic system.

Especially preferred "counter ions" and "ligands" in the catalyst systems in the composition of the invention are bromide, iodide, tetraphenylborate, hexafluorophosphate, triflate (trifluoromethanesulfonate), bis(trimethylsily)amide, bis(trifluoromethane)sulfonimide, and tosylate (p-tolylsulfonate).

In another preferred embodiment, the catalyst system in the composition of the invention comprises a Lewis acid selected from one or more compound(s) selected from the group consisting of LiX, NaX, KX, MgX₂, CaX₂ (X = Cl, Br, I), Mg(BPh₄)₂, Mg(BF₄)₂, Mg[CF₃SO₃]₂, Mg[N(SO₂CF₃)₂]₂, Mg[N(Si(CH₃)₃)₂]₂, Li[N(Si(CH₃)₃)₂], Na[N(Si(CH₃)₃)₂], and K[N(Si(CH₃)₃)₂], From among these, Mg[N(Si(CH₃)₃)₂]₂ is most preferred.

As concerns the molar ratio of the Lewis acid to the N-heterocyclic olefin, the catalyst system in the composition of the invention is not particularly limited. Preferably, however, the molar ratio of the Lewis acid to the N-heterocyclic olefin is in the range from 1 : 50 to 50 : 1, more preferably in the range from 1 : 20 to 20 : 1, and even more preferably in the range from 1 : 5 to 5 : 1.

The epoxide monomer and preferred embodiments thereof are described in the following in connection with the inventive process.

As indicated above, the catalyst systems in the composition of the invention are particularly effective for the production of polyethers by ring-opening of (substituted) epoxide monomers. Therefore, another embodiment of the invention is directed at a process for the production of polyethers, wherein an epoxide compound (or "epoxide monomer") is reacted in the presence of a catalyst system as described above, i.e. a catalyst system, which is based on a combination of a *N*-heterocyclic olefin and a Lewis acid (L).

In a preferred embodiment of the process according to the invention the epoxide compound comprises one or more compounds selected from the group consisting of 4-tert-butylphenyl glycidyl ether, phenyl glycidyl ether, 1-naphthyl glycidyl ether, 2-naphthyl glycidyl ether, 4-chlorophenyl glycidyl ether, 2,4,6-trichlorophenyl glycidyl ether, 2,4,6-tribromophenyl glycidyl ether, pentafluorophenyl glycidyl ether, cyclohexyl glycidyl ether, benzyl glycidyl ether, glycidyl benzoate, glycidyl acetate, glycidyl cyclohexylcarboxylate, methyl glycidyl ether, ethyl glycidyl ether, butyl glycidyl ether, hexyl glycidyl ether, 2-ethylhexyl glycidyl ether, octyl glycidyl ether, C₁₀ - C₁₈ alkyl glycidyl ether, allyl glycidyl ether, ethylene oxide, propylene oxide, styrene oxide, 1,2-butene oxide, 2,3-butene oxide, 1,2-hexene oxide, oxides of C₁₀ - C₁₈ alpha-olefins, cyclohexene oxide, vinylcyclohexene monoxide, limonene monoxide, butadiene monoepoxide and/or 4-tert-butylphenyl glycidyl ether

In a preferred embodiment of the invention, the epoxide compound is selected from the group consisting of ethylene oxide, propylene oxide, butylene oxide, hexylene oxide, styrene oxide, isobutylene oxide and cyclohexene oxide. Most preferred as epoxide compound are ethylene oxide, propylene oxide and/or butylene oxide.

Concerning the molar ratio of epoxide compound to the Lewis acid (L) in the catalyst system, the invention is not particularly limited, except that the molar amount of the Lewis acid (L) should be significantly (i.e. at least 5 times) lower than the molar amount of the epoxide compound. Preferably, the molar ratio of epoxide compound to the Lewis acid (L) is at least about 200 : 1, more preferably at least about 250 : 1 and most preferable at least about 500 : 1.

Since it has been observed that in ring opening reactions of epoxides a lower molar amount of NHO relative to the Lewis acid is sufficient to provide an adequately fast reaction, it is further preferred that the molar ratio of Lewis acid to NHO is more than 1 : 1, more preferably at least about 2.5 : 1 and most preferably about 5 : 1.

The process according to the invention is performed either in bulk monomer or in non-protic solvents.

Suitable non-protic solvents are for example linear or branched alkanes or mixtures of alkanes, toluene, xylene and the isomeric xylene mixtures, mesitylene, mono- or polysubstituted halogenated aromatic solvents or halogenated alkane solvents, for example chlorobenzene, dichlorobenzene, dichloromethane, dichloroethane, tetrachloroethane, linear or cyclic ether such as tetrahydrofurane (THF) or methyl-tert-butylether (MTBE) or higher ether of the repeating unit R'-(CH₂CH₂O)ₙ-R with n>1 where R and R' display a aliphatic moiety like methyl, ethyl, n-propyl, 2-propyl, n-butyl, 2-butyl, 1,1-dimethylethyl, linear or cyclic ester, or polar aprotic solvents such as 1,4-dioxane, dimethylsulfoxide (DMSO), sulfolane or mixtures of the above mentioned solvents and/or with other solvents. Preferred non-protic solvents are pentane, toluene, THF and 1,2,4-trichlorobenzene.

The reaction of the epoxide compound may be carried out in a continuous process, in a batch process or in a semi-batch process.

In one embodiment of the process according to the invention, the process is carried out continuously. That means in this continuous process the epoxide compound, the catalyst combination and, if required, the solvent are continuously added whereas a part of the reaction mixture is continuously removed from the reactor. A residencetime reactor may be added after the continuous reactor in order to complete the reaction.

In an alternative embodiment, the process according to the invention is carried out as a batch process. In this batch process the epoxide monomer, the catalyst combination, and if necessary the solvent are charged in a reactor and the reaction runs until full conversion is obtained.

In a yet alternative embodiment, the process according to the invention is carried out as a semi-batch process. In the semi-batch process, the epoxide compound is preferably mixed with a catalyst and optionally a solvent in a reactor and further epoxide monomer is continuously added to the reaction as pure material or in solution.

The reaction temperature is not subject to any relevant restrictions, except that the temperature should be high enough to provide for a sufficiently fast conversion. As a suitable reaction temperature, a range of -50°C to 100°C can be mentioned. Preferably, the reaction temperature is in the range from -35°C to 60°C, more preferably in the range from 0°C to 25°C.

A suitable reaction time for the process of the invention is for example 0.05 to 120 hours, preferably 0.25 to 48 hours, and more preferred 0.5 to 24 hours. The reaction time is the time wherein the epoxide, the catalyst system and the solvent are in direct contact at the reaction temperature.

In an embodiment, the process according to the invention further comprises a step of isolating the polyether from the reaction mixture, and heating and pressing the polyether into a desired shape.

A yet further embodiment of the invention is directed at polyethers, which are obtainable by or obtained from the polymerization of an epoxide monomer in the presence of the above described catalyst system, wherein the number average molecular weights, *M*ₙ, of the polyether is ≥ 900,000 g/mol, as determined with gel permeation chromatography (GPC), wherein the GPC method corresponds to the system disclosed in the experimental part. In addition, the polyethers can have polydispersities (= M_{w/}Mₙ) in the range of 1 to 3, preferably 1.1 to 2.5 and even more preferably 1.15 to 2.2.

If the polyether comprises units derived from more than one precursor monomer, the distribution of the monomers may be block-like, gradient, or fully random.

As indicated above, the catalyst systems described herein are particularly useful for the production of high molecular weight polyethers, but are similarly useful for other applications as well. Therefore, another embodiment is directed at a catalyst system as described above, which comprises an N-heterocyclic olefin and a Lewis acid (L).

Preferred embodiments of such catalyst systems are the same as described above for the inventive compositions. However, in a highly preferred embodiment of the invention, the catalyst system comprises an N-heterocyclic olefin and a Lewis acid (L), wherein the Lewis acid comprises a metal ion and a weakly coordinating anion selected from the group comprising tetrafluoroborate, bis(trifluoromethane)sulfonimide, [((Si(R')₃)₂N], [B(R')₄]-, [Al(R')₄]-, [Ga(R')₄]-, [In(R')₄]-, wherein R' represents hydrogen, a linear or branched, optionally heteroatom-including C₁- to C₂₂-alkyl rest, a linear or branched, mono- or polysubstituted, optionally heteroatom-including C₁- to C₂₂-alkenyl rest, a mono- or polysubstituted, optionally heteroatom-including C6- to C18-aryl rest or member(s) of a saturated or unsaturatedoptionally heteroatom-including 4- to 7-membered ring or polycyclic system. In this embodiment, the metal ion is preferably selected from Li, Na, K, Mg, and Ca. In addition, the weakly coordinating anion is preferably not C₆F₅.

In an even more preferred embodiment, the inventive catalyst system contains a Lewis acid with a metal is selected from Na, K, Mg, and Ca and a weakly coordinating anion selected from bis(trifluoromethane)sulfonimide and [((Si(R')₃)₂N]. A yet further embodiment of the invention is directed at the use of a catalyst system as described above for the production of a polyether, wherein the polyether is regularly produced by ring-opening of more than one type of epoxide monomers in the presence of the inventive catalyst system as described above. Preferably, in this use the *M*ₙ of the polyethers produced is ≥ 25,000 g/mol, more preferred ≥ 100,000 g/mol and even more preferred ≥ 500,000 g/mol, as determined with gel permeation chromatography (GPC), wherein the GPC method corresponds to the system disclosed in the experimental part.

Yet further embodiments of the present invention are directed at processes for the preparation of polyethers by ring-opening of more than one type of epoxide monomers in the presence of the inventive catalyst system, where at least one of the epoxide monomers contains a functional group other than the epoxy group, as well as polyethers obtainable from such a process. Functional groups other than the epoxy group include e.g. vinyl groups such as in allyl glycidyl ether. The polyether thus obtained may have a block-like, gradient, or fully random monomer distribution. The functional groups within the polymer allow for further post-treatment, especially cross-linking. Also for this embodiment, the *M*ₙ of the polyether is preferentially ≥ 25,000 g/mol, more preferred ≥ 100,000 g/mol and even more preferred ≥ 500,000 g/mol, as determined with gel permeation chromatography (GPC), wherein the GPC method corresponds to the system disclosed in the experimental part.

The process according to the invention is suited for the synthesis of polyethers with interesting properties for use, for example, as pharmaceutics, drug-delivery agents, medical gels or low-temperature duty rubbers.

Polyethers obtained by the method according to the invention are particularly suited as polymer building blocks in polyurethane chemistry. For example, OH-terminated polyethers may be reacted with isocyanates to form foams or other "soft-segment" polyurethanes. The high molecular weight polyethers as described herein are further useful as transparent, temperature-stable materials, which can be used both at demanding low and high temperatures. The polyethers are further especially suited for use as lubricants, surfactants and solvents.

Further possible uses of the polyethers according to the invention include for example:
- Lubricants, suitable for low- and high-temperature application.
- Surfactants, including for washing applications, anti-foaming agents in technical and food applications
- Rheology modifiers
- Plasticizers, softening additives for polymer blends
- Anti-freeze agents
- Structure-directing agents in self-assembly processes, for example for the preparation of mesoporous materials
- Damping materials, rubber and rubber-like materials
- Medical gels, especially injectable gels
- Solid or semi-solid electrolytes in electrochemical devices, such as lithium-ion or lithium-sulphur batteries
- Thermally conductive formulations for thermal management applications like heatsinks.
- Food contact applications (coatings, emulsifiers)
- Lubricating coating for surfaces in aqueous and non-aqueous environments
- Excipient in pharmaceutical applications, also as drug-delivery agent
- Stationary phase in (gas) chromatography
- Preservation applications, including wood
- Solvent for chemical reactions, or solvent for ink in printers
- Polyols, for example for polyurethane production
- Preparation of micelle- and /or polymersome-containing solutions
- Cosmetic applications, including as basis of creams or as dispersants in toothpaste
- Membranes
- Binder for ceramics production

The present invention will be further described with reference to the following examples without wishing to be limited by them.

### Examples

The following materials were used in the Examples:

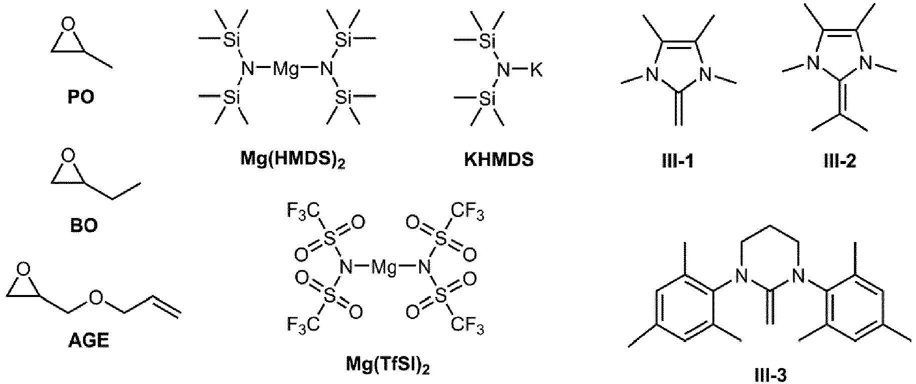

### Epoxide compound

- **PO**: Propylene oxide, obtained from TCI (> 99%).
- **BO**: Butylene oxide, obtained from TCI (> 99%).
- **AGE**: Allyl glycidylether, obtained from Sigma Aldrich.

AGE, PO and BO were dried over CaH₂, distilled under nitrogen and degassed (freezepump-thaw), prior to storing inside a glove box (N₂, -35°C).

### Lewis acid (L)

- **Mg(HMDS)₂**: Magnesium bis(hexamethyldisilazide), either obtained commercially from Sigma Aldrich (97%) or prepared according to the procedure published in Inorg. Chem. 1991, 30, 96-101.
- **KHMDS**: Potassium bis(trimethylsilyl)amide (= potassium hexamethyldisilazide), obtained from Sigma Aldrich (95%).

- **Mg(TfSI)₂**: Magnesium bis(trifluoromethanesulfonimide), obtained from Sigma Aldrich.

Lewis acids (L) were used as received and stored under nitrogen inside the glove box.

### N-heterocyclic olefins

- **III-1**: Prepared according to Angew. Chem. Int. Ed. 2015, 54, 9550 -9554
- **III-2**: Prepared according to Eur. J. Inorg. Chem. 2013, 2013, 2301-2314
- **III-3**: Prepared according to Polym. Chem., 2018, 9, 3674-3683

NHOs were prepared as indicated above and likewise stored inside the glove box freezer (-35°C).

### Solvents

Pentane was dried using a solvent purification system (SPS) by MBraun and stored inside a glove box under protective gas and over molecular sieve.

Molecular sieves (3 A, Honeywell) were activated in a vacuum oven at 130°C for 24 h prior to use.

The reactions were accomplished according to the below reaction scheme:

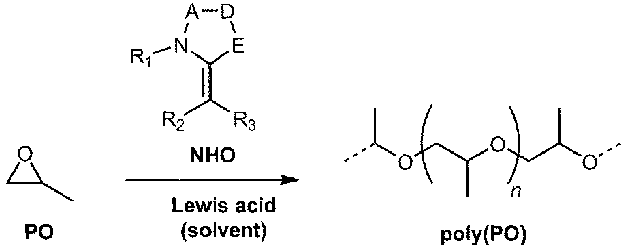

### Characterisation of polyethers

¹H nuclear magnetic resonance (NMR) analysis was employed to investigate conversion. NMR (400 MHz, 300 K): ¹H/¹³C NMR spectra were recorded on a Bruker Avance III 400 spectrometer, with the chemical shifts being reported relative to reference peaks of the applied deuterated solvents (CDCl3: δ = 7.26/77.16 ppm for proton and carbon spectra, respectively).

Gel permeation chromatography (GPC) was used to determine molecular weight (number average molecular weight, *M*ₙ) and polydispersity (*M*_{w}/*M*ₙ). GPC (CHCl₃, 40 °C): A chromatographic assembly comprising a PSS SDV 5 µm 8^{∗}50mm guard column, three PSS SDV 100 000 A 5 µm 8^{∗}50mm columns and an Agilent 1200 Series G1362A detector (RI) was employed. The concentration of the prepared samples amounted to 2.5 mg/mL, and a flow-rate of 1 mL/min was applied during the analyses. Polystyrene standards were used for calibration.

### Reactor

Small scale reactions at -35°C were conducted in 4 mL glass vials equipped with a magnetic stirring bar and sealed with a cap; the vial was placed on a magnetic stirrer inside the glove box freezer. Reactions at RT and at 60°C (oil bath) were conducted in sealable glass reactors ("pressure tubes") with 25 mL or 50 mL nominal volume. All reactions were conducted under nitrogen, with a moisture-free atmosphere.

**Table 1: Summary of examples for the synthesis of polyethers via ring-opening polymerization of epoxides using the inventive catalyst system.**

| Example | Epoxy | NHO | Lewis acid | NHO/L/epoxy | *t* [h] | *T* [°C] | Conv. [%] | *M*ₙ (PDI) [g/mol] |
|---|---|---|---|---|---|---|---|---|
| 1 | PO | **III-1** | Mg(HMDS)₂ | 1:5:1000 | 4 | -35 | >99 | 100,000 (1.21) |
| 2 | PO | **III-1** | Mg(HMDS)₂ | 1:20:5000 | 24 | -35 | >99 | 730,000 (1.19) |
| 3 | PO | **III-1** | Mg(HMDS)₂ | 1:10:5000 | 53 | -35 | 74 | 550,000 (1.23) |
| 4 | PO | **III-1** | Mg(HMDS)₂ | 1:10:5000 | 81 | -35 | >99 | 940,000 (1.24) |
| 5 | PO | **III-1** | Mg(HMDS)₂ | 1:20:10000 | 76 | -35 | 93 | 700,000 (1.20) |
| 6 | PO | **III-2** | Mg(HMDS)₂ | 1:5:5000 | 48 | RT | >99 | 380,000 (2.5) |
| 7 | PO | **III-2** | Mg(HMDS)₂ | 1:20:5000 | 141 | -35 | >99 | 2,7 Mio (1.55) |
| 8 | PO | **III-3** | Mg(HMDS)₂ | 1:5:1000 | 96 | -35 | >99 | 880,000 (2.2) |
| 9 | PO | **III-1** | Mg(TfSI)₂ | 1:5:1000 | 96 | RT | 60 | 80,000 (1.63) |
| 10 | PO | **III-1** | KHMDS | 1:5:1000 | 72 | RT | 90 | 5,200 (1.43) |
| 11 | PO | **III-2** | Mg(HMDS)₂ | 1:20:4000 | 96 | -35 | 94 | 832,000 (1.66) |
| 12 | PO | **III-1** | Mg(HMDS)₂ | 1:2.5:5000 | 384 | -35 | >99 | 767,000 (1,57) |
| 13 | PO | **III-2** | Mg(HMDS)₂ | 1:20:5000 | 2 | RT | 83 | 621,000 (1,99) |
| 14 | BO | **III-1** | Mg(HMDS)₂ | 1:5:1000 | 72 | -35 | >99 | 38,400 (2.1) |
| 15 | BO | **III-1** | Mg(HMDS)₂ | 1:20:1000 | 2 | 60 | 89 | 12,500 (2.5) |
| 16 | AGE | **III-1** | Mg(HMDS)₂ | 1:5:1000 | 30min | RT | >99 | 563,000 (1.95) |

### Example 1:

Two separate solutions were prepared and cooled to -35°C: one solution containing pentane, 0.0125 mmol NHO III-1 and PO (6.25 mmol, 500 eq.), the other containing pentane, Mg(HMDS)₂ (0.0625 mmol, 5 eq.) and PO (6.25 mmol, 500 eq.). Both solutions were then combined, resulting in a [PO] of 5 mol/l, and stirred at -35°C for 4 h. The solution became noticeably viscous during this time. A sample was withdrawn for determination of conversion via ¹H NMR, then the reaction was quenched by evaporation, removing excess PO and the solvent. The clear, gelly residue was then subjected to GPC analysis.

### Example 2:

Two separate solutions were prepared and cooled to -35°C: one solution containing pentane, 0.0125 mmol NHO III-1 and PO (31.25 mmol, 2500 eq.), the other containing pentane, Mg(HMDS)₂ (0.25 mmol, 20 eq.) and PO (31.25 mmol, 2500 eq.). Both solutions were then combined and stirred at -35°C for 24 h. The solution became noticeably viscous during this time; stirring was not possible any more. A sample was withdrawn for determination of conversion via ¹H NMR, then the reaction was quenched by evaporation, removing excess PO and the solvent. The clear, gelly residue was then subjected to GPC analysis.

### Example 3:

Two separate solutions were prepared and cooled to -35°C: one solution containing pentane, 0.0125 mmol NHO III-1 and PO (31.25 mmol, 2500 eq.), the other containing pentane, Mg(HMDS)₂ (0.125 mmol, 10 eq.) and PO (31.25 mmol, 2500 eq.). Both solutions were then combined and stirred at -35°C for 53 h. A sample was withdrawn for determination of conversion via ¹H NMR, then the reaction was quenched by evaporation, removing excess PO and the solvent. The clear, gelly residue was then subjected to GPC analysis.

### Example 4:

Two separate solutions were prepared and cooled to -35°C: one solution containing pentane, 0.0125 mmol NHO III-1 and PO (31.25 mmol, 2500 eq.), the other containing pentane, Mg(HMDS)₂ (0.125 mmol, 10 eq.) and PO (31.25 mmol, 2500 eq.). Both solutions were then combined and stirred at -35°C for 81 h. A sample was withdrawn for determination of conversion via ¹H NMR, then the reaction was quenched by evaporation, removing excess PO and the solvent. The clear, gelly residue was then subjected to GPC analysis.

### Example 5:

Two separate solutions were prepared and cooled to -35°C: one solution containing pentane, 0.0125 mmol NHO III-1 and PO (62.5 mmol, 5000 eq.), the other containing pentane, Mg(HMDS)₂ (0.25 mmol, 20 eq.) and PO (62.5 mmol, 2500 eq.). Both solutions were then combined and stirred at -35°C for 76 h. A sample was withdrawn for determination of conversion via ¹H NMR, then the reaction was quenched by evaporation, removing excess PO and the solvent. The clear, gelly residue was then subjected to GPC analysis.

### Example 6:

Two separate solutions were prepared at room temperature: one solution containing pentane, 0.0125 mmol NHO III-2 and PO (31.25 mmol, 2500 eq.), the other containing pentane, Mg(HMDS)₂ (0.0625 mmol, 5 eq.) and PO (31.25 mmol, 2500 eq.). Both solutions were then combined and stirred at RT for 48 h. The solution became noticeably viscous during this time; stirring was not possible any more. A sample was withdrawn for determination of conversion via ¹H NMR, then the reaction was quenched by evaporation, removing excess PO and the solvent. The clear, gelly residue was then subjected to GPC analysis.

### Example 7:

Two separate solutions were prepared and cooled to -35°C: one solution containing pentane, 0.0125 mmol NHO III-2 and PO (31.25 mmol, 2500 eq.), the other containing pentane, Mg(HMDS)₂ (0.25 mmol, 20 eq.) and PO (31.25 mmol, 2500 eq.). Both solutions were then combined and stirred at -35°C for 141 h. The solution became noticeably viscous during this time; stirring was not possible any more. A sample was withdrawn for determination of conversion via ¹H NMR, then the reaction was quenched by evaporation, removing excess PO and the solvent. The clear, gelly residue was then subjected to GPC analysis.

### Example 8:

Two separate solutions were prepared and cooled to -35°C: one solution containing pentane, 0.0125 mmol NHO III-3 and PO (6.25 mmol, 500 eq.), the other containing pentane, Mg(HMDS)₂ (0.0625 mmol, 5 eq.) and PO (6.25 mmol, 500 eq.). Both solutions were then combined, resulting in a [PO] of 5 mol/l, and stirred at -35°C for 96 h. The solution became noticeably viscous during this time. A sample was withdrawn for determination of conversion via ¹H NMR, then the reaction was quenched by evaporation, removing excess PO and the solvent. The clear, gelly residue was then subjected to GPC analysis.

### Example 9:

Two separate solutions were prepared at room temperature: one solution containing 0.0125 mmol NHO III-1 and PO (6.25 mmol, 500 eq.), the other containing Mg(TfSI)₂ (0.0625 mmol, 5 eq.) and PO (6.25 mmol, 500 eq.); the reaction was conducted solvent-free. Both solutions were then combined and stirred at room temperature for 96 h. The solution became noticeably viscous during this time. A sample was withdrawn for determination of conversion via ¹H NMR, then the reaction was quenched by evaporation, removing excess PO and the solvent. The clear, gelly residue was then subjected to GPC analysis.

### Example 10:

Two separate solutions were prepared at room temperature: one solution containing 0.0125 mmol NHO III-1 and PO (6.25 mmol, 500 eq.), the other containing KHMDS (0.0625 mmol, 5 eq.) and PO (6.25 mmol, 500 eq.); the reaction was conducted solvent-free. Both solutions were then combined and stirred at room temperature for 72 h. The solution became slightly viscous during this time. A sample was withdrawn for determination of conversion via ¹H NMR, then the reaction was quenched by evaporation, removing excess PO and the solvent. The clear, gelly residue was then subjected to GPC analysis. A bimodal distribution was found.

### Example 11:

Two separate solutions were prepared and cooled to -35°C: one solution containing pentane, 0.0125 mmol NHO III-2 and PO (25 mmol, 2000 eq.), the other containing pentane, Mg(HMDS)₂ (0.25 mmol, 20 eq.) and PO (25 mmol, 2000 eq.). Both solutions were then combined and stirred at -35°C for 96 h. A sample was withdrawn for determination of conversion via ¹H NMR, then the reaction was quenched by evaporation, removing excess PO and the solvent. The clear, gelly residue was then subjected to GPC analysis.

### Example 12:

Two separate solutions were prepared and cooled to -35°C: one solution containing pentane, 0.0125 mmol NHO III-1 and PO (31.25 mmol, 2500 eq.), the other containing pentane, Mg(HMDS)₂ (0.0375 mmol, 2.5 eq.) and PO (31.25 mmol, 2500 eq.). Both solutions were then combined and stirred at -35°C for 384 h. A sample was withdrawn for determination of conversion via ¹H NMR, then the reaction was quenched by evaporation, removing excess PO and the solvent. The clear, gelly residue was then subjected to GPC analysis.

### Example 13:

To PO in the bulk (62.5 mmol, 5000 eq.), 0.0125 mmol NHO III-2 and Mg(HMDS)₂ (0.25 mmol, 20 eq.) was added. The solution was stirred at RT for 2 h, during which time the solution became noticeably viscous until stirring was not possible any more. A sample was withdrawn for determination of conversion via ¹H NMR, then the reaction was quenched by evaporation, removing excess PO and the solvent. The clear, gelly residue was then subjected to GPC analysis.

### Example 14:

To BO in the bulk (12.5 mmol, 1000 eq.), 0.0125 mmol NHO III-1 and Mg(HMDS)₂ (0.0625 mmol, 5 eq.) was added. The solution was stirred at -35°C for 72 h, during which time the solution became noticeably viscous until stirring was not possible any more. A sample was withdrawn for determination of conversion via ¹H NMR, then the reaction was quenched by evaporation, removing excess PO and the solvent. The clear, gelly residue was then subjected to GPC analysis.

### Example 15:

To BO in the bulk (12.5 mmol, 1000 eq.), 0.0125 mmol NHO III-1 and Mg(HMDS)₂ (0.25 mmol, 20 eq.) was added. The solution was stirred at 60°C for 2 h, during which time the solution became noticeably viscous. A sample was withdrawn for determination of conversion via ¹H NMR, then the reaction was quenched by evaporation, removing excess PO and the solvent. The clear, gelly residue was then subjected to GPC analysis.

### Example 16:

To allyl glycidyl ether (AGE) in the bulk (12.5 mmol, 1000 eq.), 0.0125 mmol NHO III-1 and Mg(HMDS)₂ (0.0625 mmol, 20 eq.) was added. The solution was stirred at RT for 30 minutes, during which time the solution became noticeably viscous following an exothermic reaction. A sample was withdrawn for determination of conversion via ¹H NMR, the reaction was then quenched by evaporation, removing excess PO and the solvent. The clear, gelly residue was then subjected to GPC analysis.

## Claims

1. Composition comprising at least one epoxide monomer and a catalyst system comprising an N-heterocyclic olefin and a Lewis acid (L).

2. Composition according to claim 1, wherein the catalyst system comprises a mixture of the N-heterocyclic olefin having the general formula (I) and the Lewis acid (L), 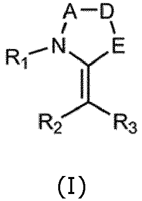
wherein A and D mutually independently represent methylene moiety, CHR₄, and CR₄R₄ or A and D together stand for a moiety from the series ethylene, propylene, butylene, 1,2-phenylene, R₄-C=N-, -N=N- or C₁-C₁₀ alkyl, C₂-C₁₀ alkenyl, C₃-C₁₂ cycloalkyl, C₆-C₁₀₀ polyoxyalkylene, C₅-C₁₀ aryl or C₅-C₁₀ hetaryl group-substituted 1,2-phenylene, -CH=N-, -CH₂-NR₄-, vinylene, -CH₂=CHR₄-, -CHR₄=CH₂-, - CHR₄=CHR₄-;
R₁ and R₄ mutually independently represent C₁-C₁₀ alkyl, C₂-C₁₀ alkenyl, C₃-C₁₂ cycloalkyl, C₆-C₁₀₀ polyoxyalkylene, C₅-C₁₀ aryl or C₅-C₁₀ heteroaryl, wherein the C₅-C₁₀ aryl or C₅-C₁₀ heteroaryl may be further substituted;
R₂ and R₃ mutually independently represent H, C₁-C₁₀ alkyl, C₂-C₁₀ alkenyl, C₃-C₁₂ cycloalkyl, C₆-C₁₀₀ polyoxyalkylene, C₅-C₁₀ aryl or C₅-C₁₀ heteroaryl, wherein the C₅-C₁₀ aryl or C₅-C₁₀ heteroaryl may be further substituted;
and wherein E is -O-, -S-, -NR₅- or -PR₅, and R₅ has the meaning given above for R₁.

3. Composition according to claim 2, where R₁ and R₄ in the N-heterocyclic olefin of the general formula (I) are mutually independent and represent methyl, ethyl, n-propyl, isopropyl, tert-butyl, neopentyl, isoamyl, cyclohexyl, phenyl, 2,6-dimethylphenyl, 2,6-diisopropylphenyl or mesityl moiety; wherein R₂ and R₃ mutually independently represent the H, methyl, ethyl, n-propyl, isopropyl, cyclopropyl, tertbutyl, neopentyl, isoamyl, cyclohexyl, phenyl, 2,6-dimethylphenyl, 2,6-diisopropylphenyl or mesityl moiety; and wherein moieties A and D together stand for an ethylene, vinylene or propylene moiety.

4. Composition according to claim 2 or 3, wherein R₁ and R₄ in the N-heterocyclic olefin of the general formula (I) are mutually independent and are selected from methyl, ethyl, isopropyl, tertbutyl, cyclohexyl, phenyl or mesityl moieties and wherein R₂ and R₃ are mutually independently selected from H, methyl, ethyl or phenyl.

5. Composition according to one of claims 1 to 4, wherein the N-heterocyclic olefin in the catalyst system is one or more compounds having the formulae (II-1), (II-2), (II-3), (II-4), (II-5), (II-6), (II-7), (II-8), (II-9), (II-10), (II-11), (II-12), (II-13) and (II-14)

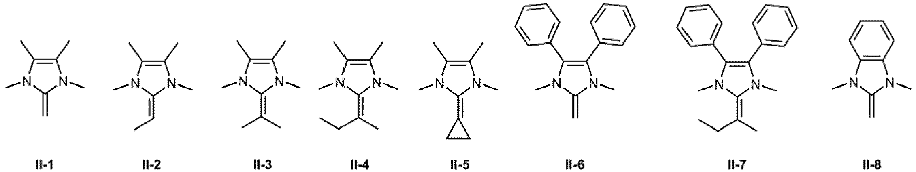

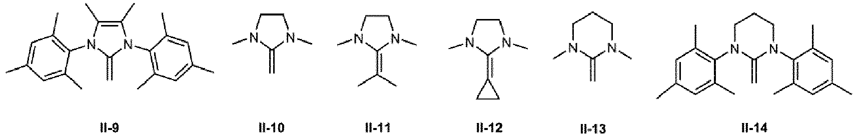

6. Composition according to one of claims 1 to 5, wherein the Lewis acid in the catalyst system is one or more compound(s) and selected from the group consisting of LiX, NaX, KX, MgX₂, CaX₂, wherein X is Cl, Br or I, Mg(BPh₄)₂, Mg(BF₄)₂, Mg[CF₃SO₃]₂, Mg[N(SO₂CF₃)₂]₂, Mg[N(Si(CH₃)₃)₂]₂, Li[N(Si(CH₃)₃)₂], Na[N(Si(CH₃)₃)₂], and K[N(Si(CH₃)₃)₂], preferably Mg[N(Si(CH₃)₃)₂]₂.

7. Composition according to one of claims 1 to 6, wherein the molar ratio of the Lewis acid to the N-heterocyclic olefin in the catalyst system is from 1 : 50 to 50 : 1, preferably from 1 : 20 to 20 : 1, more preferably from 1 : 5 to 5 : 1.

8. Process for the production of polyethers, wherein an epoxide monomer is reacted in the presence of the catalyst system as described in one of claims 1 to 7.

9. Process according to claim 8, wherein the reaction temperature is in the range of from -50°C to 100°C, preferably in the range from -35°C to 60°C, more preferably in the range from 0°C to 25°C.

10. Process according to one of claims 8 or 9, wherein the epoxide compound is one or more compounds selected from the group consisting of 4-tert-butylphenyl glycidyl ether, phenyl glycidyl ether, 1-naphthyl glycidyl ether, 2-naphthyl glycidyl ether, 4-chlorophenyl glycidyl ether, 2,4,6-trichlorophenyl glycidyl ether, 2,4,6-tribromophenyl glycidyl ether, pentafluorophenyl glycidyl ether, cyclohexyl glycidyl ether, benzyl glycidyl ether, glycidyl benzoate, glycidyl acetate, glycidyl cyclohexylcarboxylate, methyl glycidyl ether, ethyl glycidyl ether, butyl glycidyl ether, hexyl glycidyl ether, 2-ethylhexyl glycidyl ether, octyl glycidyl ether, C10 - C18 alkyl glycidyl ether, allyl glycidyl ether, ethylene oxide, propylene oxide, styrene oxide, 1,2-butene oxide, 2,3-butene oxide, 1,2-hexene oxide, oxides of C10 - C18 alpha-olefins, cyclohexene oxide, vinylcyclohexene monoxide, limonene monoxide, butadiene monoepoxide and/or 4-tert-butylphenyl glycidyl ether, preferentially the epoxide compound is selected from the group consisting of ethylene oxide, propylene oxide, butylene oxide, hexylene oxide, styrene oxide, isobutylene oxide and cyclohexene oxide.

11. Polyether, obtainable or obtained by the process of any one of claims 8 to 10, wherein the number average molecular weights Mₙ of the polyether is ≥ 900,000 g/mol, as determined by gel permeation chromatography (GPC) as described in the specification.

12. A catalyst system comprising an N-heterocyclic olefin and a Lewis acid (L), wherein the Lewis acid comprises a metal ion, preferably selected from Li, Na, K, Mg, and Ca, and a weakly coordinating anion selected from the group comprising tetrafluoroborate, bis(trifluoromethane)sulfonimide, [((Si(R')₃)₂N], [B(R')₄]-, [Al(R')₄]-, [Ga(R')₄]-, [In(R')₄]-, wherein R' represents hydrogen, a linear or branched, optionally heteroatom-including C₁- to C₂₂-alkyl rest, a linear or branched, mono- or polysubstituted, optionally heteroatom-including C₁- to C₂₂-alkenyl rest, a mono- or polysubstituted, optionally heteroatom-including C6- to C18-aryl rest or member(s) of a saturated or unsaturated, optionally heteroatom-including 4- to 7-membered ring or polycyclic system, wherein the weakly coordinating anion is preferably not C₆F₅.

13. Catalyst system according to claim 12, wherein the metal ion of the Lewis acid is selected from Na, K, Mg, and Ca and wherein the weakly coordinating anion selected from bis(trifluoromethane)sulfonimide and [((Si(R')₃)₂N].

14. Use of a composition according to any one of claims 1 to 7 or a catalyst system according to claim 12 or 13 for the production of polyethers.

## Patentansprüche

1. Zusammensetzung, die mindestens ein Epoxidmonomer und ein Katalysatorsystem, umfassend ein N-heterocyclisches Olefin und eine Lewis-Säure (L), enthält.

2. Zusammensetzung nach Anspruch 1, wobei das Katalysatorsystem eine Mischung des N-heterocyclischen Olefins mit der allgemeinen Formel (I) und der Lewis-Säure (L) umfasst, 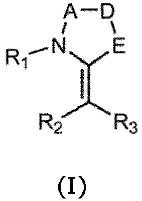
worin A und D beide unabhängig eine Methyleneinheit, CHR₄ und CR₄R₄ darstellen oder A und D zusammen für eine Einheit aus der Reihe Ethylen, Propylen, Butylen, 1,2-Phenylen, R₄-C=N-, -N=N- oder C₁-C₁₀-Alkyl, C₂-C₁₀-Alkenyl, C₃-C₁₂-Cycloalkyl, C₆-C₁₀₀-Polyoxyalkylen, C₅-C₁₀-Aryl oder C₅-C₁₀-Hetarylgruppen-substituiertes 1,2-Phenylen, -CH=N-, -CH₂-NR₄-, Vinylen, -CH₂=CHR₄-, -CHR₄=CH₂-, -CHR₄=CHR₄-stehen;
R₁ und R₄ beide unabhängig C₁-C₁₀-Alkyl, C₂-C₁₀-Alkenyl, C₃-C₁₂-Cycloalkyl, C₆-C₁₀₀-Polyoxyalkylen, C₅-C₁₀-Aryl oder C₅-C₁₀-Heteroaryl darstellen, wobei das C₅-C₁₀-Aryl oder C₅-C₁₀-Heteroaryl weiter substituiert sein kann;
R₂ und R₃ beide unabhängig H, C₁-C₁₀-Alkyl, C₂-C₁₀-Alkenyl, C₃-C₁₂-Cycloalkyl, C₆-C₁₀₀-Polyoxyalkylen, C₅-C₁₀-Aryl oder C₅-C₁₀-Heteroaryl darstellen, wobei das C₅-C₁₀-Aryl oder C₅-C₁₀-Heteroaryl weiter substituiert sein kann;
und worin E -O-, -S-, -NR₅- oder -PR₅ ist und R₅ die vorstehend für R₁ angegebene Bedeutung hat.

3. Zusammensetzung nach Anspruch 2, wobei R₁ und R₄ in dem N-heterocyclischen Olefin der allgemeinen Formel (I) beide unabhängig sind und für einen Methyl-, Ethyl-, n-Propyl-, Isopropyl-, tert.-Butyl-, Neopentyl-, Isoamyl-, Cyclohexyl-, Phenyl-, 2,6-Dimethylphenyl-, 2,6-Diisopropylphenyl- oder Mesitylrest stehen; worin R₂ und R₃ beide unabhängig für einen H-, Methyl-, Ethyl-, n-Propyl-, Isopropyl-, Cyclopropyl-, tert.-Butyl-, Neopentyl-, Isoamyl-, Cyclohexyl-, Phenyl-, 2,6-Dimethylphenyl-, 2,6-Diisopropylphenyl- oder Mesitylrest stehen; und worin die Einheiten A und D zusammen für eine Ethylen-, Vinylen- oder Propylen-Einheit stehen.

4. Zusammensetzung nach Anspruch 2 oder 3, wobei R₁ und R₄ in dem N-heterocyclischen Olefin der allgemeinen Formel (I) beide unabhängig sind und ausgewählt sind aus Methyl-, Ethyl-, Isopropyl-, tert.-Butyl-, Cyclohexyl-, Phenyl- oder Mesitylresten und wobei R₂ und R₃ beide unabhängig ausgewählt sind aus H, Methyl, Ethyl oder Phenyl.

5. Zusammensetzung nach einem der Ansprüche 1 bis 4, wobei das N-heterocyclische Olefin in dem Katalysatorsystem eine oder mehrere Verbindungen mit den Formeln (II-1), (II-2), (II-3), (II-4), (II-5), (II-6), (II-7), (II-8), (II-9), (II-10), (II-11), (II-12), (II-13) und (II-14) ist

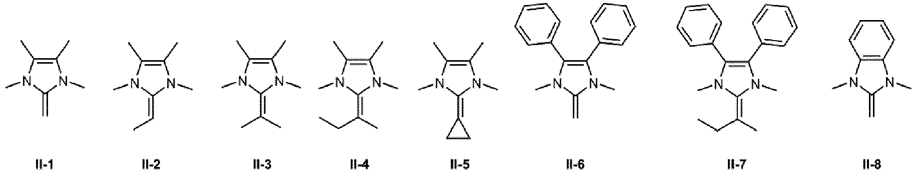

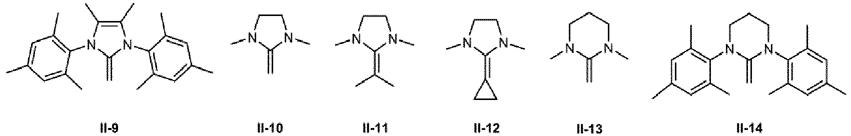

6. Zusammensetzung nach einem der Ansprüche 1 bis 5, wobei die Lewis-Säure in dem Katalysatorsystem eine oder mehrere Verbindungen ist und ausgewählt ist aus der Gruppe bestehend aus LiX, NaX, KX, MgX₂, CaX₂, wobei X C!, Br oder I ist, Mg(BPh₄)₂, Mg(BF₄)₂, Mg[CF₃SO₃]₂, Mg[N(SO₂CF₃)₂]₂, Mg[N(Si(CH₃)₃)₂]₂, Li[N(Si(CH₃)₃)₂], Na[N(Si(CH₃)₃)₂] und K[N(Si(CH₃)₃)₂], bevorzugt Mg[N(Si(CH₃)₃)₂]₂, ist.

7. Zusammensetzung nach einem der Ansprüche 1 bis 6, wobei das molare Verhältnis der Lewis-Säure zu dem N-heterocyclischen Olefin im Katalysatorsystem 1 : 50 bis 50 : 1, bevorzugt 1 : 20 bis 20 : 1, bevorzugter 1 : 5 bis 5 : 1 beträgt.

8. Verfahren zur Herstellung von Polyethern, wobei ein Epoxidmonomer in Gegenwart des Katalysatorsystems wie in einem der Ansprüche 1 bis 7 beschrieben umgesetzt wird.

9. Verfahren nach Anspruch 8, wobei die Reaktionstemperatur im Bereich von -50°C bis 100°C, bevorzugt im Bereich von -35°C bis 60°C, bevorzugter im Bereich von 0°C bis 25°C liegt.

10. Verfahren nach einem der Ansprüche 8 oder 9, wobei die Epoxidverbindung eine oder mehrere Verbindungen ist, ausgewählt aus der Gruppe bestehend aus 4-tert.-Butylphenylglycidylether, Phenylglycidylether, 1-Naphthylglycidylether, 2-Naphthylglycidylether, 4-Chlorphenylglycidylether, 2,4,6-Trichlorphenylglycidylether, 2,4,6-Tribromphenylglycidylether, Pentafluorphenylglycidylether, Cyclohexylglycidylether, Benzylglycidylether, Glycidylbenzoat, Glycidylacetat, Glycidylcyclohexylcarboxylat, Methylglycidylether, Ethylglycidylether, Butylglycidylether, Hexylglycidylether, 2-Ethylhexylglycidylether, Octylglycidylether, C10-C18-Alkylglycidylether, Allylglycidylether, Ethylenoxid, Propylenoxid, Styroloxid, 1,2-Butenoxid, 2,3-Butenoxid, 1,2-Hexenoxid, Oxiden der C10-C18-alpha-Olefine, Cyclohexenoxid, Vinylcyclohexenmonoxid, Limonenmonoxid, Butadienmonoepoxid und/oder 4-tert.-Butylphenylglycidylether, wobei die Epoxidverbindung bevorzugt ausgewählt ist aus der Gruppe bestehend aus Ethylenoxid, Propylenoxid, Butylenoxid, Hexylenoxid, Styroloxid, Isobutylenoxid und Cyclohexenoxid.

11. Polyether, erhältlich oder erhalten durch das Verfahren nach einem der Ansprüche 8 bis 10, wobei das Zahlenmittel des Molekulargewichts Mₙ des Polyethers ≥ 900.000 g/mol ist, wie durch Gelpermeationschromatographie (GPC) wie in der Beschreibung beschrieben bestimmt.

12. Katalysatorsystem, umfassend ein N-heterocyclisches Olefin und eine Lewis-Säure (L), wobei die Lewis-Säure umfasst ein Metallion, bevorzugt ausgewählt aus Li, Na, K, Mg und Ca, und ein schwach koordinierendes Anion, ausgewählt aus der Gruppe, umfassend Tetrafluorborat, Bis(trifluormethan)sulfonimid, [((Si(R')₃)₂N], [B(R')₄]-, [Al(R')₄]-, [Ga(R')₄]-, [In(R')₄]-, wobei R' Wasserstoff, ein linearer oder verzweigter, gegebenenfalls Heteroatom enthaltender C₁- bis C₂₂-Alkylrest, ein linearer oder verzweigter, mono- oder polysubstituierter, gegebenenfalls Heteroatom enthaltender C₁- bis C₂₂-Alkenylrest, ein mono- oder polysubstituierter, gegebenenfalls Heteroatom enthaltender C6- bis C18-Arylrest oder ein Element oder Elemente aus einem gesättigten oder ungesättigten, gegebenenfalls Heteroatom enthaltenden 4- bis 7-gliedrigen Ring- oder polycyclischen System ist, wobei das schwach koordinierende Anion bevorzugt nicht C₆F₅ ist.

13. Katalysatorsystem nach Anspruch 12, wobei das Metallion der Lewis-Säure ausgewählt ist aus Na, K, Mg und Ca und wobei das schwach koordinierende Anion ausgewählt ist aus Bis(trifluormethan)sulfonimid und [((Si(R')₃)₂N].

14. Verwendung einer Zusammensetzung nach einem der Ansprüche 1 bis 7 oder eines Katalysatorsystems nach Anspruch 12 oder 13 zur Herstellung von Polyethern.

## Revendications

1. Composition comprenant au moins un monomère d'époxyde et un système catalytique comprenant une oléfine N-hétérocyclique et un acide de Lewis (L).

2. Composition selon la revendication 1, dans laquelle le système catalytique comprend un mélange de l'oléfine N-hétérocyclique ayant la formule générale (I) et de l'acide de Lewis (L), 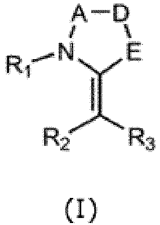
dans laquelle A et D représentent mutuellement indépendamment un fragment méthylène, CHR₄, et CR₄R₄ ou A et D représentent ensemble un fragment de la série éthylène, propylène, butylène, 1,2-phénylène, R₄-C=N-, -N=N- ou un alkyle en C₁ à C₁₀, un alcényle en C₂ à C₁₀, un cycloalkyle en C₃ à C₁₂, un polyoxyalkylène en C₆ à C₁₀₀, un 1,2-phénylène substitué avec un aryle en C₅ à C₁₀ ou un hétaryle en C₅ à C₁₀, -CH=N-, -CH₂-NR₄-, un vinylène, -CH₂=CHR₄-, -CHR₄=CH₂-, -CHR₄=CHR₄- ;
R₁ et R₄ représentent mutuellement indépendamment un alkyle en C₁ à C₁₀, un alcényle en C₂ à C₁₀, un cycloalkyle en C₃ à C₁₂, un polyoxyalkylène en C₆ à C₁₀₀, un aryle en C₅ à C₁₀ ou un hétéroaryle en C₅ à C₁₀, dans laquelle l'aryle en C₅ à C₁₀ ou l'hétéroaryle en C₅ à C₁₀ peut en outre être substitué ;
R₂ et R₃ représentent mutuellement indépendamment H, un alkyle en C₁ à C₁₀, un alcényle en C₂ à C₁₀, un cycloalkyle en C₃ à C₁₂, un polyoxyalkylène en C₆ à C₁₀₀, un aryle en C₅ à C₁₀ ou un hétéroaryle en C₅ à C₁₀, dans laquelle l'aryle en C₅ à C₁₀ ou l'hétéroaryle en C₅ à C₁₀ peut en outre être substitué ;
et dans laquelle E est -O-, -S-, -NR₅- ou -PR₅, et R₅ a la signification donnée ci-dessus pour R₁.

3. Composition selon la revendication 2, dans laquelle R₁ et R₄ dans l'oléfine N-hétérocyclique de formule générale (I) sont mutuellement indépendants et représentent un fragment méthyle, éthyle, n-propyle, isopropyle, tert-butyle, néopentyle, isoamyle, cyclohexyle, phényle, 2,6-diméthylphényle, 2,6-diisopropylphényle ou mésityle ; dans laquelle R₂ et R₃ représentent mutuellement indépendamment le fragment H, méthyle, éthyle, n-propyle, isopropyle, cyclopropyle, tert-butyle, néopentyle, isoamyle, cyclohexyle, phényle, 2,6-diméthylphényle, 2,6-diisopropylphényle ou mésityle ; et dans laquelle les fragments A et D représentent ensemble un fragment éthylène, vinylène ou propylène.

4. Composition selon la revendication 2 ou 3, dans laquelle R₁ et R₄ dans l'oléfine N-hétérocyclique de formule générale (I) sont mutuellement indépendants et sont sélectionnés parmi les fragments méthyle, éthyle, isopropyle, tertbutyle, cyclohexyle, phényle ou mésityle et dans laquelle R₂ et R₃ sont mutuellement indépendamment sélectionnés parmi H, un méthyle, un éthyle ou un phényle.

5. Composition selon l'une des revendications 1 à 4, dans laquelle l'oléfine N-hétérocyclique dans le système catalytique est un ou plusieurs composés ayant les formules (11-1), (II-2), (II-3), (II-4), (II-5), (II-6), (11-7), (11-8), (11-9), (11-10), (11-11), (11-12), (11-13) et (11-14)

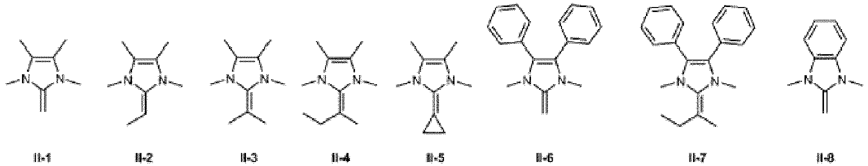

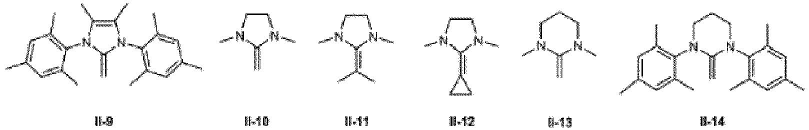

6. Composition selon l'une des revendications 1 à 5, dans laquelle l'acide de Lewis dans le système catalytique est un ou plusieurs composé(s) et sélectionné dans le groupe consistant en LiX, NaX, KX, MgX₂, CaX₂, dans laquelle X est Cl, Br ou 1, Mg (BPh₄)₂, Mg(BF₄)₂, Mg[CF₃SO₃]₂, Mg[N(SO₂CF₃)₂]₂, Mg[N(Si (CH₃)₃)₂]₂, Li[N(Si (CH₃)₃)₂], Na[N(Si (CH₃)₃)₂] et K[N(Si (CH₃)₃)₂], de préférence Mg[N(Si (CH₃)₃)₂]₂.

7. Composition selon l'une des revendications 1 à 6, dans laquelle le rapport molaire de l'acide de Lewis par rapport à l'oléfine N-hétérocyclique dans le système catalytique est de 1:50 à 50:1, de préférence de 1:20 à 20:1, de manière davantage préférée de 1:5 à 5:1.

8. Procédé de production de polyéthers, dans lequel un monomère d'époxyde est mis à réagir en présence du système catalytique tel que décrit dans l'une des revendications 1 à 7.

9. Procédé selon la revendication 8, dans lequel la température de réaction est dans la plage de -50 °C à 100 °C, de préférence dans la plage de -35 °C à 60 °C, de manière davantage préférée dans la plage de 0 °C à 25 °C.

10. Procédé selon l'une des revendications 8 ou 9, dans lequel le composé d'époxyde est un ou plusieurs composés sélectionnés dans le groupe consistant en le 4-tert-butylphénylglycidyléther, le phénylglycidyléther, le 1-naphtylglycidyléther, le 2-naphtylglycidyléther, le 4-chlorophénylglycidyléther, le 2,4,6-trichlorophénylglycidyléther, le 2,4,6-tribromophénylglycidyléther, le pentafluorophénylglycidyléther, le cyclohexylglycidyléther, le benzylglycidyléther, le benzoate de glycidyle, l'acétate de glycidyle, le cyclohexylcarboxylate de glycidyle, le méthylglycidyléther, l'éthylglycidyléther, le butylglycidyléther, l'hexylglycidyléther, le 2-éthylhexylglycidyléther, l'octylglycidyléther, un (alkyle en C₁₀ à C₁₈) glycidyléther, l'allylglycidyléther, l'oxyde d'éthylène, l'oxyde de propylène, l'oxyde de styrène, l'oxyde de 1,2-butène, l'oxyde de 2,3-butène, l'oxyde de 1,2-hexène, les oxydes d'alpha-oléfines en C₁₀ à C₁₈, l'oxyde de cyclohexène, le monoxyde de vinylcyclohexène, le monoxyde de limonène, le monoépoxyde de butadiène et/ou le 4-tert-butylphénylglycidyléther, de préférence le composé d'époxyde est sélectionné dans le groupe consistant en l'oxyde d'éthylène, l'oxyde de propylène, l'oxyde de butylène, l'oxyde d'hexylène, l'oxyde de styrène, l'oxyde d'isobutylène et l'oxyde de cyclohexène.

11. Polyéther, pouvant être obtenu ou obtenu par le procédé selon l'une quelconque des revendications 8 à 10, dans lequel le poids moléculaire moyen en nombre Mₙ du polyéther est ≥ 900 000 g/mol, tel que déterminé par chromatographie par perméation sur gel (GPC) comme décrit dans la description.

12. Système catalytique comprenant une oléfine N-hétérocyclique et un acide de Lewis (L), dans lequel l'acide de Lewis comprend un ion métallique, de préférence sélectionné parmi Li, Na, K, Mg, et Ca, et un anion faiblement coordinant sélectionné dans le groupe comprenant le tétrafluoroborate, le bis(trifluorométhane)-sulfonimide, [((Si(R')₃)₂N], [B(R')₄]-, [Al(R')₄]-, [Ga(R')₄]-, [In(R')₄]-, dans lequel R' représente un hydrogène, un reste alkyle en C₁ à C₂₂ linéaire ou ramifié comportant facultativement un hétéroatome, un reste alcényle en C₁ à C₂₂ linéaire ou ramifié, mono- ou poly-substitué, comportant facultativement un hétéroatome, un reste aryle en C₆ à C₁₈ mono- ou poly-substitué comportant facultativement un hétéroatome ou un ou plusieurs élément(s) d'un système cyclique ou polycyclique de 4 à 7 chaînons, saturé ou insaturé, comportant facultativement un hétéroatome, dans lequel l'anion faiblement coordinant n'est de préférence pas C₆F₅.

13. Système catalytique selon la revendication 12, dans lequel l'ion métallique de l'acide de Lewis est sélectionné parmi Na, K, Mg, et Ca et dans lequel l'anion faiblement coordinant est sélectionné parmi le bis(trifluorométhane)-sulfonimide et [((Si(R')₃)₂N].

14. Utilisation d'une composition selon l'une quelconque des revendications 1 à 7 ou d'un système catalytique selon la revendication 12 ou 13 pour la production de polyéthers.
